# EUROPÄISCHE PATENTSCHRIFT

(11) **EP 0 539 545 B1**
(45) Veröffentlichungstag und Bekanntmachung des Hinweises auf die Patenterteilung: **20.12.1995**
(21) Anmeldenummer: 92909653.5
(22) Anmeldetag: 12.05.1992
(51) Int. Cl.: A01G 25/09, A01M 7/00

(54) **FAHRBARE BEREGNUNGSMASCHINE MIT EINEM TRAGWERK**
MOBILE SPRINKLER WITH A CHASSIS
ARROSEUR MOBILE AVEC UNE STRUCTURE PORTEUSE

(30) Priorität: 17.05.1991 DE 4116138
(43) Veröffentlichungstag der Anmeldung: 05.05.1993
(73) Patentinhaber: TROMMER, Dieter, D-07751 Vierzehnheiligen (DE)
(72) Erfinder: TROMMER, Dieter, D-07751 Vierzehnheiligen (DE)
(74) Vertreter: Bock, Gerhard
(86) Internationale Anmeldenummer: DE9200396
(87) Internationale Veröffentlichungsnummer: WO9220214

(56) Entgegenhaltungen:
- EP-A- 0 157 592
- DE-A- 3 938 869
- FR-A- 907 549
- FR-A- 2 595 205
- GB-A- 886 277
- US-A- 3 972 476

## Beschreibung

Die Erfindung betrifft eine fahrbare bzw. selbstfahrende Beregnungsmaschine gemäß dem Oberbegriff des ersten Patentanspruchs. Die Beregnungsmaschine soll nicht nur zur Beregnung landwirtschaftlicher Nutzflächen, sondern auch zum Besprühen von Kulturen dienen.

Zum Beregnen von landwirtschaftlichen Nutzflächen sind fahrbare Beregnungsmaschinen unterschiedlicher Ausführung bekannt. Kreisberegnungsmaschinen (US-PS 3.851.659) fahren auf Fahrwerken um die Zapfstelle kreisförmig herum. Dementsprechend liegen die von der Zapfstelle weiter abliegenden Teile der Regnerleitung größere Strecken zurück als ihre der Zapfstelle näher liegenden Teile. Dies kann sich auf die Intensität der Beregnung auswirken. Kreisberegnungsmaschinen sind vorwiegend fest installiert bzw. lassen sich nur mit hohem Arbeitsaufwand umsetzen. Bei mehreren Kreisberegnungsanlagen werden entweder bestimmte Flächen mehrfach oder gar nicht beregnet, wodurch die Effektivität der Beregnung geschmälert wird.
Rollregnerleitungen sind in Rädern mit großen Durchmessern rechtwinklig zu den Radscheiben angeordnet und werden um 380° oder ein mehrfaches davon in die nächste Arbeitsstellung bewegt. Dabei rollen die Räder ab, und entsprechend den Raddurchmessern wird die Regnerleitung über ihre ganze Länge gleichmäßig vorwärts bewegt. Der Nachteil der Rollregnerleitung ist darin zu sehen, daß durch Torsion der Regnerleitung und durch Bodenunebenheiten die Regnerstellungen unerwünscht verändert werden und die Regner nach der Vorwärtsbewegung nicht ihre Sollstellung einnehmen. Bei Schlauchberegnungsmaschinen (Bauer Rainboy 50 TS) wird ein einzelner Regner oder ein Regnerwagen mit mehreren Düsen mit den angeschlossenen Zuleitungsschlauch zunächst auf eine gewünschte Distanz von der Schlauchtrommel gebracht, der Schlauch wird ausgezogen und danach im regnenden Zustand von der Schlauchtrommel mit Hilfe des Schlauchs als Zugmittel mit erforderlicher Arbeitsgeschwindigkeit zur Schlauchtrommel hin bewegt. Schließlich sind Regnerwagen (Auslegerstative) bekannt, bei denen auf einem drei- oder vierrädrigen Wagen Regnerrohre quer zur Fahrtrichtung angeordnet sind, die in die statische Konstruktion einbezogen und durch Seile, die von einem Gerüst auf dem Wagen ausgehen, gehalten werden, siehe CS-PS 217.520 und Bauer Rainstar mit Auslegerstativ (Druckschrift BG 1072/XI-83). Damit lassen sich Geländestreifen bis zu 50 m Breite beregnen. Diese Arbeitsbreite ist aber oft nicht ausreichend. Außerdem sind ein hoher Arbeitsaufwand beim Bewegen und Umsetzen des Regnerwagens erforderlich und eine starke Beanspruchung der auf dem Boden gezogenen Schläuche gegeben.
Aus der FR-A-2,595,205 ist eine Berieselungseinheit mit zu einem Fahrzeug symmetrisch angebrachten faltbaren Tragarmen für Berieselungsrohre bekannt. Die Tragarme sind am Fahrzeug mit ersten Teilen in horizontalen Ebenen schwenkbar gelagert. Die zweiten und weiteren Teile der Tragarme sind an den ersten Teilen in vertikalen Ebenen schwenkbar angeordnet. Hierdurch ist es zwar möglich, die Tragarme um ein Mehrfaches zu verlängern und damit die Berieselungsbreite zu vergrößern, jedoch ergeben sich erhebliche Höhen für die Berieselungseinheiten, wodurch ihr Transport von einer Berieselungsfläche zur anderen bei vorhandenen Unterführungen und Freileitungen erschwert oder unmöglich wird. Auch treten beim Auslegen der Tragarme dann Schwierigkeiten auf, wenn Baum- oder Strauchwerk sich im Bereich der horizontalen Schwenkebenen befindet. Schließlich ist die Stabilität des Fahrzeuges wegen der großen Differenzen zwischen der Fahrzeuglänge und der Tragarmlänge relativ gering. Ähnliche Probleme treten bei einem Beregnungsbaum gemäß der GB-A-886277 auf, der zusammen mit einem Traktor verwendet wird. An einem mittleren, vom Traktor unmittelbar getragenen Gerät sind Regnerarme abgeordnet, die nach hinten wegknickbar sind, wenn sie aufein Hindernis treffen, und sich wieder in die Normallage einstellen, wenn das Hindernis nicht mehr besteht. Abgesehen davon, daß es sich hierbei um ein relativ kleines Zusatzgerät handelt, besteht bei ungünstiger Lage des Hindernisses die Gefahr, daß größere Flächenstücke nicht beregnet werden.

Der Erfindung liegt daher die Aufgabe zugrunde, eine fahrbare und selbstfahrende Beregnungsmaschine zu schaffen, die die Vorteile der bekannten Einrichtungen umfaßt, ohne deren Nachteile zu übernehmen. Sie soll eine große Arbeitsbreite bei Verwendung nur eines Fahrwerks ermöglichen. Beim Aufbau der Beregnungsmaschine sollen Hindernisse innerhalb der Arbeitsbreite sich auf das Auslegen der Tragarme nicht störend auswirken. Ebenso soll der Einfluß von Bodenunebenheiten weitestgehend ausgeschaltet werden.
Gemäß der Erfindung wird diese Aufgabe in ihren Details durch eine gemäß dem Kennzeichen des ersten Patentanspruchs gestaltete Beregnungsmaschine gelöst.
Die trapezförmigen Stirnflächen von Tragarmen und Tragwerk ermöglichen eine kreisförmige Bewegung der Tragarmenden um 180^{o} aus einer waagerechten Ausgangslage über eine schräge Kulminationsstellung in eine im wesentlichen waagerechte Endlage. Dabei bewegen sich die Tragarme infolge ihrer größten Schrägstellung bei einem Schwenkwinkel von 90^{o} über Hindernisse (Bäume, Sträucher, Masten usw.) hinweg, so daß diese nicht stören. Die Schwenkbewegung der Tragarme kann von einem oder mehreren Motoren über mechanische oder hydraulische Getriebe auf die Tragarme übertragen werden. Im ausgelegten Zustand liegen die trapezförmigen Stirnflächen der Tragarme an den trapezförmigen Stirnflächen des Tragwerks bzw. der vorhergehenden Tragarme an. Im zusammengeklappten Zustand liegen die Tragarme parallel zu den im wesentlichen rechteckigen, zueinander geneigten Seitenflächen des Tragwerks. Die Länge der Beregnungsmaschine ist bei ihrem Transport größer als ihre Breite.
Bevor die Beregnung beginnt, werden die Radhalter um 90° gedreht, so daß die bisherige Länge des Tragwerks in Breitenrichtung, d.h. in Richtung der ausgelegten Tragarme quer zur Bewegungsrichtung der Beregnungsmaschine während der Beregnung liegt.
Nimmt man an, daß die am Tragwerk befestigten Tragarme 25 m lang sind, so hat das Tragwerk zweckmäßigerweise die gleiche Länge und eine Breite von ca. 3 m. Im ausgeklappten Zustand der Tragarme ergäbe sich dann eine Auslegerbreite von 3 x 25 m= 75 m. Werden weitere Tragarme an die mit dem Tragwerk unmittelbar verbundenen Tragarme beidseitig angebracht, so vergrößert sich die Auslegerbreite entsprechend. In jedem Fall ist die Tragwerkslänge vollständig in die Auslegerbreite integriert, die ihrerseits geringer sein kann als die Arbeitsbreite. Auf diese Weise ist es möglich, eine Arbeitsbreite von 150 m und mehr zu erreichen. Das ist besonders dann der Fall, wenn die Regnerrohre parallel zu den ausgeklappten Tragarmen über die Tragarmenden hinaus verlängert werden können. Werden entsprechende Regner an den Enden der von den Tragarmen getragenden Regnerrohre vorgesehen, so ist es möglich, die Arbeitsbreite beträchtlich, z.B. nach jeder Seite um ca. 40 m zu erweitern. Auf diese Weise kann bei einer Maschinenbreite (Länge von Tragwerk, Tragarmen und verlängerten Regnerrohren) von bspw. 170 m die Arbeitsbreite 250 m betragen.

Beim Beregnen mit Wasser, Gülle, Klärschlamm, Abwässern und/oder anderen Flüssigkeiten kommt es ebenso wie beim Besprühen von Kulturen mit Pflanzenschutzmitteln darauf an, daß die Applikationshöhe der Regner bzw. Düsen und damit die Höhe der Tragarme über dem Boden möglichst gleichbleibend ist. Das kann mit Steuerungs- oder Regelungseinrichtungen bewerkstelligt werden. Hierzu sind zumindest an den äußeren Tragarmen Tastorgane, z.B. Stäbe, Rollen, elektromagnetische Abstandsmesser oder dergleichen vorgesehen, die den Abstand des jeweiligen Tragarms vom Boden bestimmen und diesen Abstand an einen Bewegungsmechanismus weitergeben, der den Abstand des Tragarms vom Boden entsprechend verändert. Als Bewegungsmechanismen können Hydraulikzylinder zusammen mit Masten und Seilen dienen. Die Seile sind dabei mit einem Ende am jeweiligen Tragarm und mit dem anderen Ende an einem zugehörigen, auf dem Tragwerk in Auslegerichtung schwenkbaren Mast befestigt. Die Schwenkung jedes Mastes wird von einem Hydraulikzylinder besorgt. Eine andere Möglichkeit der Steuerung der Applikationshöhe (der Höhe der Tragarme über dem Boden) ist die Verwendung ausschließlich von Hydraulikzylindern, die an den Verbindungsstellen jedes Tragarms mit dem Tragwerk bzw. jedes äußeren Tragarms mit dem benachbarten inneren Tragarm vorgesehen sind. Die Masten, Seile und Hydraulikzylinder dienen gleichzeitig der Erhöhung der Stabilität der gesamten Beregnungsmaschine.

Die Erfindung wird nachstehend anhand von zwei in der schematischen Zeichnung dargestellten Ausführungsbeispielen näher erläutert. Es zeigen:
- Fig. 1: eine Seitenansicht eines ersten Ausführungsbeispiels der Erfindung,
- Fig. 2: eine Draufsicht des ersten Ausführungsbeispiels,
- Fig. 3: eine Detaildarstellung A aus Fig. 1,
- Fig. 4: eine Vorderansicht eines zweiten Ausführungsbeispiels und
- Fig. 5: eine Draufsicht des zweiten Ausführungsbeipiels.

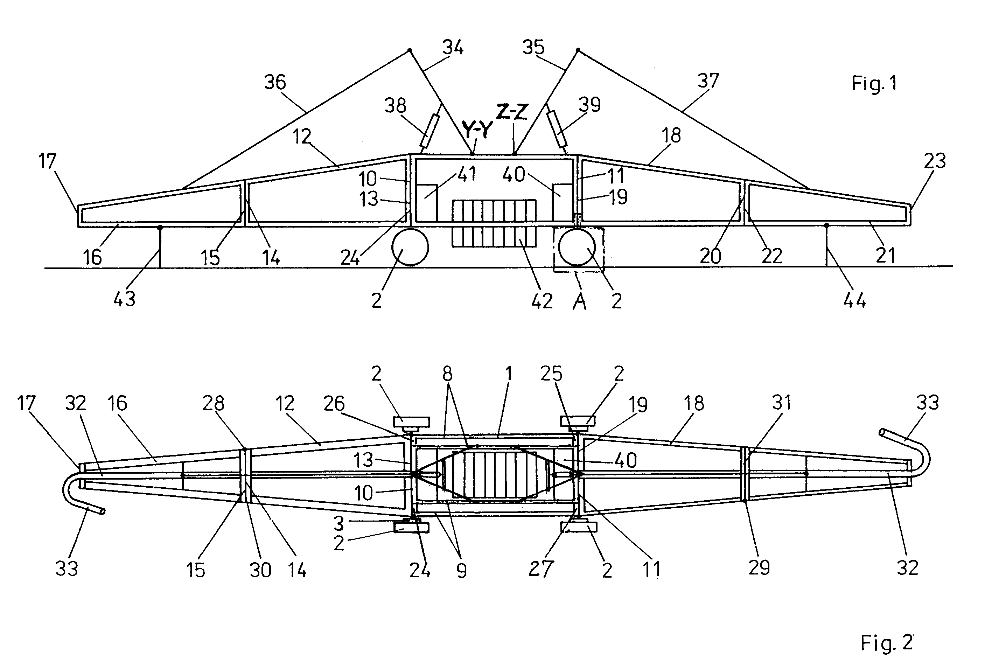

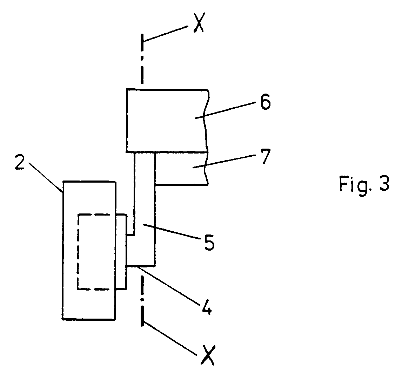

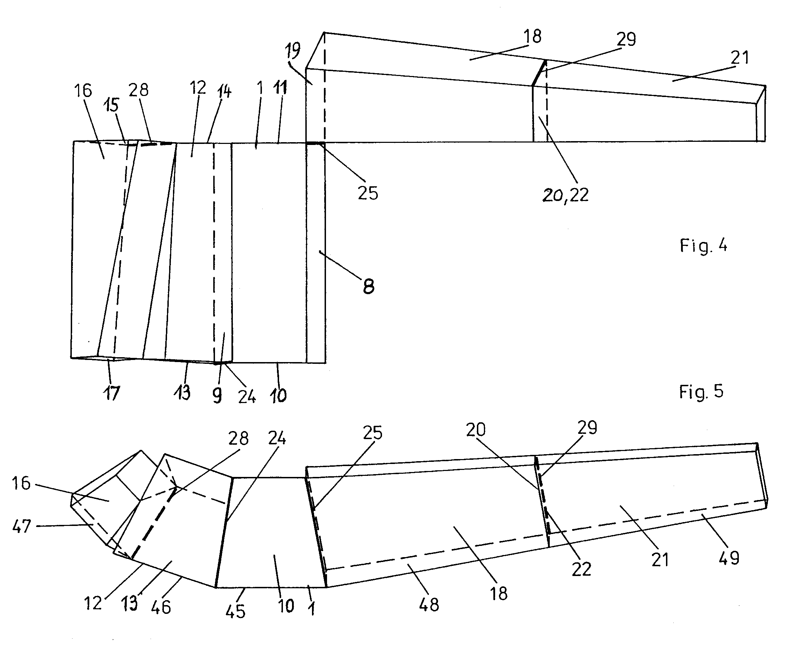

In den Figuren 1 und 2 ist ein Tragwerk 1 auf vier Rädern 2 angeordnet, die am Tragwerk 1 um vertikale Achsen X-X schwenkbar gelagert sind und von in den Radnaben 3 befindlichen Getrieben, z.B. Hydrogetrieben, synchron angetrieben werden. Diese Anordnung ist für eines der Räder 2 in Fig. 3 vergrößert dargestellt. Dabei ist das Rad 2 mit seiner Nabe 3 auf einem Achszapfen 4 drehbar gelagert, der an einem Achszapfenständer 5 befestigt ist und in ein Lenkgetriebe 6 eingreift, das an einem Grundrahmen 7 des Tragwerks 1 starr angebracht ist. Das Lenkgetriebe 6 schwenkt den Achszapfenständer 5 jedes Rades 2 während des Lenkvorganges um die Achse X-X und hält ihn in der entsprechenden Drehlage fest. Das Targwerk 1 weist auf dem Grundrahmen 7 zwei durch Rahmenkonstruktionen festgelegte rechteckige Seitenflächen 8 und 9 sowie trapezförmige Stirnflächen 10 und 11 auf. Von der Stirnfläche 10 geht ein Tragarm 12 mit trapezförmigen Querschnitt aus, dessen der Stirnfläche 10 benachbart liegende Stirnfläche 13 gleich der Stirnfläche 10 ist. Dieser Tragarm 12 verjüngt sich zu seiner entgegengesetzt liegenden Stirnfläche 14 hin, an die sich eine gleichgeformte Stirnfläche 15 eines weiteren Tragarms 16 anschließt, der sich in Richtung einer an seinem Ende befindlichen Stirnfläche 17 ebenfalls verjüngt, die eine dreieckige Form aufweisen kann. Der Querschnitt des Tragarms 16 geht also von der Trapezform der Stirnfläche 15 in die Dreieckform der Stirnfläche 17 über. In gleicher Weise ist an die Stirnfläche 11 ein Tragarm 18 angesetzt, dessen der Stirnfläche 11 benachbarte Stirnfläche 19 in Form und Größe gleich ist, der sich zu einer Stirnfläche 20 hin verjüngt und an den sich eine weiterer Tragarm 21 anschließt, dessen der Stirnfläche 20 benachbarte Stirnfläche 22 dieser gleich ist und der sich zu einer am freien Ende befindlichen dreieckigen Stirnfläche 23 hin verjüngt. Zur Verdeutlichung wird auch auf die Figuren 4 und 5 verwiesen, aus denen die Trapezform der Stirnflächen des Tragwerks 1 und der Tragarme 12, 16, 18, 21 deutlich hervorgeht. Die Tragarme 12 und 18 bzw. 16 und 21 sind geometrisch gleich gestaltet. Sämtliche Tragarme 12, 16, 18, 21 haben dieselbe Länge und sind in Gerüstkonstruktion ausgeführt. Sie dienen zur Aufnahme von Regnerleitungen 32 einschließlich Verteilorganen. Die Regnerleitungen können über die Stirnflächen 17 und 23 hinausragen. Dabei können die über die Tragarme 16 und 21 hinausragenden Teile 33 der Regnerleitung 32 umlegbar gestaltet und mit den übrigen Teilen der Regnerleitung 32 gelenkig verbunden sein. Der Tragarm 12 und der Tragarm 18 sind mit dem Tragwerk 1 entlang der Trapezkante 24 bzw. 25 gelenkig verbunden. Entsprechend sind der Tragarm 12 und der Tragarm 18 am Tragwerk 1 in der dargestellten Lage entlang der Trapezkanten 26 und 27 arretiert. In gleicher Weise sind die Tragarme 16 und 21 an den Tragarmen 12 und 18 entlang der Trapezkanten 28, 29 gelenkig verbunden und entlang der Trapezkanten 30 und 31 arretiert. An den Tragarmen 16 und 21 bzw. 12 und 18 sind mindestens je ein Tastorgan 43 und 44 (Taststab oder Tastrolle) vorgesehen.

Auf dem ebenfalls als Gerüstkonstruktion ausgeführten Tragwerk 1 sind zwei Masten 34 und 35 parallel zur Zeichenebene der Fig. 1 schwenkbar gelagert. Mit einem Ende ist jeder Mast 34 bzw. 35 an das Tragwerk 1 um eine zur Zeichenebene der Fig. 1 rechtwinklig gerichtete Achse Y-Y bzw. Z-Z schwenkbar angeordnet, während mit seinem anderen Ende jeweils über ein Seil 36 bzw. 37 einer der Tragarme 16 und 21 in Verbindung steht. Der Schrägstellung der Masten 34 und 35 dienen Hydraulikzylinder 38 und 39, die einerseits am Tragwerk 1 und andererseits je an einem der Masten 34 und 35 angelenkt sind.

Am Tragwerk 1 sind an einer Seite außerdem ein Motor mit einer Wasserpumpe, einem Generator und einer Hydraulikpumpe angeordnet, die zeichnerisch der Einfachheit halber in einem Block 40 zusammengefaßt sind. Der Motor treibt den Generator für eine elektrische Steuerung und die Pumpen an.

An der anderen Seite des Tragwerks 1 befindet sich ein elektrohydraulischer Steuerblock 41. Zwischen dem Block 40 und dem Steuerblock 41 ist eine Schlauchtrommel 42 vorgesehen, deren Achse parallel zur Längsausdehnung des Tragwerks 1 gerichtet ist. Über den elektrohydraulischen Steuerblock 41 erfolgen der Antrieb und die Lenkung der Räder 2, der Antrieb der Schlauchtrommel 42, die Betätigung der Hydraulikzylinder 38, 39 zur Höhenregulierung der Tragarme 12, 16 einerseits und 18, 21 andererseits in Abhängigkeit von den von den Tastorganen 43, 44 erhaltenen Tastsignalen. Schließlich wird vom elektrohydraulischen Steuerblock 41 das Aus- und Einschwenken der Tragarme 12, 16, 18, 21 gesteuert.

In den Figuren 1 und 2 befindet sich die im wesentlichen aus dem Tragwerk 1 und den Tragarmen 12, 16, 18, 21 bestehende selbstfahrende Beregnungsmaschine gemäß der Erfindung im betriebsfertigen Zustand; d.h. die Tragarme 12, 16, 18, 21 sind aus ihrer Transportlage, in der sie sich im wesentlichen parallel zum Tragwerk 1 zu dessen beiden Seiten befinden, in die Arbeitsstellung eingeschwenkt, in der sie das Tragwerk 1 beidseitig verlängern. Damit sich in der Arbeitsstellung die Beregnungsmaschine rechtwinklig zur Längsausdehnung des Tragwerks 1 bewegen kann, werden die Räder 2 aus der dargestellten Lage dementsprechen um die Achsen X-X um 90° geschwenkt. Da die Tragarme 12, 16, 18, 21 je die gleiche Länge haben wie das Targwerk 1, ist es möglich, mit dieser Beregnungsmaschine mindestens eine Arbeitsbreite zu beregnen, die gleich der fünfachen Länge des Tragwerks 1 ist. Da die Regerleitungen 32 mit ihren Teilen 33 über die Tragarme 16 und 21 hinausragen und an ihren Enden befindliche, nicht dargestellte Regner noch eine bestimmte Wurfweite haben, ist es leicht möglich, eine Arbeitsbreite zu erreichen, die größer ist als die sechsbis siebenfache Länge des Tragwerks 1.

Infolge der Anordnung der Schlauchtrommel 42 im Tragwerk 1 und ihrer Lage parallel zur Länge des Tragwerks 1 ist es möglich, die Beregnungsmaschine über eine große Arbeitslänge mit nahezu gleicher Antriebskraft zu bewegen. Da der Schlauch nicht über die Arbeitsfläche gezogen sondern nur abgelegt bzw. aufgenommen wird, kann er dünnwandiger und von größerem Durchmesser als üblich sein; dabei erfährt er eine schonendere Behandlung.

Ein Arbeitsgang mit der vorstehend beschriebenen Beregnungsmaschine gestaltet sich folgendermaßen:
Der Schlauch der Schlauchtrommel 42 wird einerseits an eine nicht dargestellte Zapfstelle angeschlossen, andererseits endet er an der Wasserpumpe des Blocks 40, an die die Regnerleitungen 32 angeschlossen sind. Danach wird die Beregnungsmaschine rechtwinklig zu ihrer Längsausdehnung in Abhängigkeit von der gewünschten Beregnungsmenge pro Fläche bewegt. Dabei treibt der Motor die Hydraulikpumpe im Block 40 an, die über den Steuerblock 41 die in den Radnaben 3 befindlichen Hydrogetriebe und die Räder 2 in Bewegung setzt. Auf diese Weise wird die fahrbare Beregnungsmaschine über die zu beregnende Fläche geführt, wobei die Arbeitslänge maximal gleich der Länge des auf die Trommel 42 aufgewickelten Schlauchs ist. Dabei kann die Bewegung der Beregnungsmaschine von Hand oder automatisch gesteuert werden. Eine seitliche Auslenkung der Beregnungsmaschine bei dem so vollzogenen Ausfahrvorgang zum horizontalen Umfahren von Hindernissen ist durch gleichzeitiges, synchrones Schwenken zweier parallel angeordneter Räder 2 möglich. Vertikal wirkende Unebenheiten werden durch die Tastorgane 43: 44 erfaßt; diese verstellen über den elektrohydraulischen Steuerblock 41 die Hydraulikzylinder 38, 39 so, daß die Masten 34, 35 mehr oder weniger aufgerichtet und somit die Tragarme 12, 16, 18, 21 über die Seile 36, 37 angehoben werden. In ähnlicher Weise können im Bedarfsfall die Masten 34, 35 stärker geneigt und damit über die Seile 36; 37 die Tragarme 12, 16, 18, 21 abgesenkt werden.

Am Ende der Arbeitslänge (Flächenende oder Schlauchende) wird die Bewegungsrichtung der Beregnungsmaschine umgekehrt, und die Beregnungsmaschine fährt vorzugsweise mittels eines nicht dargestellten Tastorgans entlang des Schlauchs zur Zapfstelle zurück. Dabei wird der abgelegte Schlauch wieder auf die Trommel 42 aufgenommen. Die Anordnung ist vorteilhaft so getroffen, daß die Beregnungsmaschine beim Aus- und Einfahren beregnet. Dabei kann beim Ausfahren die Fläche mit Gülle und beim Einfahren mit Wasser beregnet werden, das die Gülle von den Kulturen abspült.
Eine Höhenverstellung der gesamten, vorzugsweise selbstfahrenden Beregnungsmaschine ist durch Aus- oder Einfahren der Achszapfenständer 5 gegegenüber dem Lenkgetriebe 6 parallel zur Achse X-X möglich.
Beim Umsetzten der Beregnungsmaschine von einer Beregnungsfläche zur anderen werden alle vier Räder 2 um 90° so gedreht, daß, wie in den Figuren 1 und 2 dargestellt, die Radflächen parallel zur Längsausdehnung des Tragwerks 1 stehen. Dabei erfolgt die Umsetzung im aufgebauten Zustand der Beregnungsmaschine. Die Tastorgane 43, 44 regulieren in diesem Fall die Abstände der Tragarme 12, 16, 18, 21 zum Boden. Der Beregnungsvorgang kann sich zu beiden Seiten der Zapfstelle vollziehen, ohne daß eine Drehung der Beregnungsmaschine nötig ist.
Anstelle der Masten 34, 35, der sie haltenden Hydraulikzylinder 38, 39 und der zu den Tragarmen 16, 21 gespannten Seile 36, 37 können an den Stirnflächen 10 und 13, 11 und 19 des Tragwerks 1 bzw. der Tragarme 12 und 18 sowie an den Stirnflächen 14, 15, 20 und 22 der Tragarme 12, 16 und 18, 21 im wesentlichen horizontal angeordnete Hydraulikzylinder vorgesehen sein, die das Halten und Regulieren dieser Tragarme zum Boden übernehmen.
Anstelle des trapezförmigen Querschnitts können das Tragwerk 1 und/oder die Tragarme 12, 16, 18, 21 auch durchweg dreieckigen Querschnitt aufweisen. Dementsprechend sind dann auch die Stirnflächen 10,11, 13, 14, 15, 19, 20, 22 dreieckförmig gestaltet.

In den Figuren 4 und 5 sind das Tragwerk 1 und die Tragarme 12, 16, 18, 21 mit trapezförmigen Querschnitten vereinfacht dargestellt. Dabei nimmt die Größe des trapezförmigen Querschnitts vom Tragwerk 1 zu den freien Enden der Tragarme hin ab. Da insbesondere die Höhenbewegung der Tragarme beim Ausschwenken und ihre Einschwenklage erläutert werden sollen, sind alle übrigen Teile weggelassen worden. Die Tragarme 12, 16 befinden sich in der Einschwenklage im wesentlichen parallel zum Tragwerk 1. Die Gelenkkante des Tragwerks 1 mit dem Tragarm 12 ist mit 24 bezeichnet. Um die Kante 24 ist der Tragarm 12 um etwa 180° am Tragwerk 1 schwenkbar gelagert. Der Tragarm 16 ist um die Gelenkkante 28 schwenkbar am Tragarm 12 gelagert, die diametral zur Gelenkkante 24 liegt. Auf der anderen Seite des Tragwerks 1 ist der Tragarm 18 bereits um 90° um die Gelenkkante 25 ausgeschwenkt dargestellt. Der Tragarm 21 ist so um die Gelenkkante 29 ausgeschwenkt, daß seine Stirnfläche 22 an die gleichgroße Stirnfläche 20 des Tragarms 18 deckungsgleich zu liegen kommt. Sämtliche Gelenkkanten 24, 25, 28, 29 sind durch verstärkte Linien gekennzeichnet.
Obwohl die Aus- bzw. Einschwenkung der Tragarme 12, 16, 18, 21 in der Praxis auf beiden Seiten des Tragwerks 1 aus Stabilitätsgründen synchron erfolgt, sind zur Verdeutlichung der Bewegung der freien Enden der Tragarme die Tragarme 12, 16 einerseits und die Tragarme 18, 21 andererseits in unterschiedlichen Schwenkstellungen gezeichnet.
Aufgrund der oben zueinander geneigten rechteckigen Seitenflächen 8, 9 des Tragwerks 1 und der trapezförmigen Querschnitte der Tragarme 12, 16, 18, 21 sind in der eingeschwenkten Lage der Tragarme 12, 16 deren Grundflächen 46, 47 zur Grundfläche 45 des Tragwerks 1 unterschiedlich geneigt. Aus dem gleichen Grunde sind die Grundflächen 48, 49 der Tragarme 18, 21 in der um 90° geschwenkten Lage gegenüber der Grundfläche 45 des Tragwerks 1 um denselben Betrag geneigt. Dabei wird deutlich, daß die Schwenkarme 18, 21 (und in entsprechender Lage die Schwenkarme 12, 16) sich über einen bei 90° Schwenkung liegenden Kulminationspunkt im Verlauf ihrer Aus- und Einschwenkung bewegen, also mit ihren freien Enden eine Höhenbewegung vollführen, vermöge deren sie über Hindernisse hinweggeschwenkt werden können, bevor sie bei etwa 180° Ausschwenkung mit ihren Grundflächen 46, 47, 48, 49 in der gleiche Höhe wie die Grundfläche 45 des Tragwerks 1 liegen; dieser Zustand ist in den Figuren 1 und 2 dargestellt.

## Patentansprüche

1. Fahrbare Beregnungsmaschine mit einem Tragwerk (1), das auf Rädern (2) angeordnet ist, das zwei Stirnflächen (10, 11) und zwei Seitenflächen (8, 9) aufweist, die gemeinsame Kanten (24, 25, 26, 27) haben und rechte Winkel einschließen und an dem seitlich mindestens zwei in der Nähe des Tragwerks (1) Stirnflächen (13, 19) besitzende schwenkbare Tragarme (12, 18) angeordnet sind, die sich von den Stirnflächen (13, 19) aus verjüngen, dadurch gekennzeichnet, daß die Seitenflächen (8, 9) des Tragwerks (1) gegeneinander geneigt sind, daß die gemeinsamen Kanten (24,26;25,27) jeder Stirnfläche (13, 19) entsprechend den Seitenflächen (8, 9) gegeneinander geneigt sind, daß mit dem Tragwerk (1) an zwei gegenüberliegenden Kanten (24, 25) jeweils einer Stirnfläche (10, 11) mit einer Seilenfläche die Tragarme (12, 16, 18, 21) gelenkig verbunden sind, daß die Stirnflächen (13, 19) der Tragarme (12, 18) im wesentlichen die gleiche Form und Größe haben wie die an ihren Verbindungsstellen zu den Tragarmen (12, 18) benachbart angeordneten Stirnflächen (10, 11) des Tragwerks (1) und daß die Achszapfen (4) der Räder (2) im wesentlichen um 90° um eine zu den Achszapfen (4) im wesentlichen senkrechte Achse (X-X) schwenkbar sind.

2. Fahrbare Beregnungsmaschine nach Anspruch 1., dadurch gekennzeichnet, daß die Tragarme (12, 16, 18, 21) im wesentlichen gleiche Länge haben.

3. Fahrbare Beregnungsmaschine nach Anspruch 1. und/oder 2., dadurch gekennzeichnet, daß am verjüngten Ende jedes Tragarms (12, 18) ein weiterer Tragarm (16 bzw. 21) in gleicher Weise wie der erste Tragarm (12 bzw. 18) am Tragwerk (1) angelenkt ist und daß die einander zugewandten Flächen (14, 15 bzw. 20, 22) zweier aneinander gelenkter Tragarme (12, 16 bzw. 18, 21) in Form und Größe gleich sind.

4. Fahrbare Beregnungsmaschine nach Anspruch 3., dadurch gekennzeichnet, daß die Stirnflächen (14, 15 bzw. 20, 22) die Form von Trapezen haben.

5. Fahrbare Beregnungsmaschine nach mindestens einem der vorstehenden Ansprüche, dadurch gekennzeichnet, daß auf dem Tragwerk (1) zwei in Richtung der ausgelegten Tragarme (12, 16, 18, 21) schwenkbare Masten (34, 35) angeordnet sind, daß Schwenkmittel (38, 39) einerseits an die Masten (34, 35) und andererseits an das Tragwerk (1) angelenkt sind, daß an den ausgelegten Tragarmen (12, 16, 18, 21) Taster (43, 44) zur Höhenbestimmung vorgesehen sind, die über einen Steuerblock (41) mit den Schwenkmitteln (38, 39) verbunden sind, und daß von den freien Enden der Masten (34, 35) Seile (36, 37) zu den ausgelegten Tragarmen (12, 16, 18, 21) gespannt sind.

6. Fahrbare Beregnungsmaschine nach Anspruch 4., dadurch gekennzeichnet, daß die Schwenkmittel (38, 39) als Hydraulikzylinder ausgebildet sind.

7. Fahrbare Beregnungsmaschine nach Anspruch 4., dadurch gekennzeichnet, daß die Taster (43, 44) pendelnde Stäbe sind.

8. Fahrbare Beregnungsmaschine nach Anspruch 4., dadurch gekennzeichnet, daß die Seile (36, 37) in der Nähe der vom Tragwerk (1) abliegenden Enden an den Tragarmen (12, 16, 18, 21) befestigt sind.

9. Fahrbare Beregnungsmaschine nach Anspruch 3., dadurch gekennzeichnet, daß an den ausgelegten Tragarmen (12, 16, 18, 21) Taster (43, 44) zur Höhenbestimmung und an den Verbindungstellen von Tragwerk (1) zu den Tragarmen (12, 16) bzw. von Tragarm (12, 16) zu Tragarm (18, 21) Hydraulikzylinder (38, 39) vorgesehen sind und zwischen dem jeweiligen Taster (43, 44) und dem zugehörigen Hydraulikzylinder (38, 39) ein Steuerblock (41) angeordnet ist.

10. Fahrbare Beregnungsmaschine nach mindestens einem der vorstehenden Ansprüche, dadurch gekennzeichnet, daß am letzten, vom Tragwerk (1) entfernt liegenden Tragarm (16, 21) ausfahrbare Rohre (33) vorgesehen sind.

11. Fahrbare Beregnungsmaschine nach mindestens einem der vorstehenden Ansprüche, dadurch gekennzeichnet, daß das Tragwerk (1) und die sich nach beiden Seiten anschließenden Tragarme (12, 16, 18, 21) im wesentlichen die gleiche Länge haben.

## Claims

1. Mobile sprinkler comprising a chassis (1) mounted on wheel (2), two frontal areas (10, 11) and two lateral faces (8, 9) having respective edges (24, 25, 26, 27) in common and including right angles, and two laterally arranged pivotal jib arms (12, 18) being provided with faces (13, 19) adjacent to the chassis (1) and which taper starting from the faces (13, 19), characterised in that the lateral faces (8, 9) of the the chassis (1) are mutually inclined, that the respective common edges (24, 26; 25,27) of each face (13, 19) are mutually inclined corresponding to the lateral faces (8, 9), that the chassis (1) is pivotally connected to a lateral face of the jib arms (12, 18, 16, 21) via two remote edges (24,25) of the respective frontal area (10, 11), in that the faces (13, 19) of the jib arms (12, 18) are substantially identical in shape and size to the frontal areas (10,11) of the chassis (1) adjacently arranged at the connection place to the jib arms (12, 18), and in that the axle end pivot (4) of the wheels (2) are substantially pivotal by 90 about an axis (X-X) being substantially perpendicular to the axle end pivot (4).

2. Mobile sprinkler as claimed in claim 1, wherein the jib arms (12, 16, 18, 21) substantially are of equal length.

3. Mobile sprinkler as claimed in claim 1 and/or 2, wherein the tapered tail of each jib arm (12, 18) is pivotally connected to a further jib arm (16 and 21, respectively) in the same manner as the first jib arm (12 and 18, respectively) to the chassis (1), and wherein the opposing faces (14, 15, and 20, 22, respectively) of two pivotally connected jib arms 12, 16, and 18, 21) are identical as concerns size and shape.

4. Mobile sprinkler as claimed in claim 3, wherein the faces (14, 15, and 20, 22), respectively, are trapezoidal.

5. Mobile sprinkler as claimed in at least one of the preceding claims, wherein two pivotal beams (34, 35) are arranged in alignment with the extended jib arms (12, 16, 18, 21) on the chassis (1), and wherein pivot means (38, 39) are hinged to the beams (34, 35), on the one hand, and to the chassis (1), on the other hand, and wherein feelers (43, 44) for determination of height are provided on the extended jib arms (12, 16, 18, 21) connected to the pivot means (38, 39) via a control unit (41), and wherein ropes (36, 37) are tensioned from the free end portions of the beams (34, 35) to the extended jib arms (12, 16, 18, 21).

6. Mobile sprinkler as claimed in claim 4, wherein the pivot means (38, 39) are hydraulically operating cylinders.

7. Mobile sprinkler as claimed in claim 4, wherein the feelers (43, 44) are suspended rods.

8. Mobile sprinkler as claimed in claim 4, wherein the ropes (36, 37) are secured near to the end portions of the jib arms (12, 16, 18, 21) remote from the chassis (1).

9. Mobile sprinkler as claimed in claim 3, wherein feelers (43, 44) for determination of height are provided on the extended jib arms (12, 16, 18, 21) and hydraulically operating cylinders (38, 39) are provided at the connection regions between the chassis (1) and the jib arms (12, 16), respectively, between the jib arms (12, 16) and the jib arms (18, 21), and wherein a control unit (41) is provided between the respective feeler (43, 44) and the coordinated hydraulically operating cylinder (38, 39).

10. Mobile sprinkler as claimed in at least one of the preceding claims, wherein extendible pipes (33) are provided on the last jib arm (16, 21) being remote from the chassis (1).

11. Mobile sprinkler as claimed in at least one of the preceding claims, wherein the chassis (1) and the jib arms (12, 16, 18, 21) attached to either side of the chassis (1) are substantially of equal length.

## Revendications

1. Machine d'arrosage mobile avec appareil porteur (1) placé sur des roues (2), présentant deux faces frontales (10, 11) et deux faces latérales (8, 9) ayant des arêtes communes (24, 25, 26, 27) et incluant des angles droits; au moins deux bras porteurs pivotants (12, 18) possédant des faces frontales (13, 19) à proximité de l'appareil porteur (1) sont disposés dans la partie latérale de l'appareil porteur; les bras porteurs pivotants s'effilent à partir des faces frontales (13, 19); la machine d'arrosage est caractérisée par le fait que les faces latérales (8, 9) de l'appareil porteur (1) sont inclinées l'une vers l'autre, que les arêtes communes (24, 26; 25, 27) de chaque face frontale (13, 19) sont inclinées les unes vers les autres conformément aux faces latérales (8, 9), que les bras porteurs (12, 16, 18, 21) sont liés de façon articulée à l'appareil porteur (1) en ce qui concerne deux arêtes opposées (24, 25) formées par une face frontale (10, 11) et une face latérale respectives; que les faces frontales (13, 19) des bras porteurs (12, 18) présentent essentiellement la même forme et la même taille que les faces frontales (10, 11) de l'appareil porteur (1) disposées de façon contiguë aux points de jonction avec les bras porteurs (12, 18); la machine d'arrosage est caractérisée par le fait que les fusées d'essieu (4) des roues (2) pivotent essentiellement de 90° autour d'un essieu (X-X) essentiellement vertical par rapport aux fusées d'essieu (4).

2. Machine d'arrosage mobile conforme à la spécification 1., caractérisée par le fait que les bras porteurs (12, 16, 18, 21) présentent essentiellement la même longueur.

3. Machine d'arrosage mobile conforme aux spécifications 1. et/ou 2., caractérisée par le fait qu'à l'extrémité effilée de chaque bras porteur (12, 18) un autre bras porteur (16 ou bien 21) est articulé de la même façon avec l'appareil porteur (1) que le premier bras porteur (12 ou bien 18); la machine est en outre caractérisée par le fait que la forme et la taille des faces non opposées (14, 15 ou bien 20, 22) de deux bras porteurs articulés l'un avec l'autre sont égales.

4. Machine d'arrosage mobile conforme à la spécification 3., caractérisée par le fait que les faces frontales (14, 15 ou bien 20, 22) sont trapézoïdales.

5. Machine d'arrosage mobile conforme à au moins une seule des spécifications ci-dessus mentionnées, caractérisée par le fait que, sur l'appareil porteur (1), deux mâts pivotants (34, 35) sont placés en direction des bras porteurs disposés (12, 16, 18, 21); caractérisée par le fait que des dispositifs pivotants (38, 39) sont articulés d'une part avec les mâts (34, 35) et d'autre part avec l'appareil porteur (1); que des palpeurs (43, 44) destinés à la mesure d'altitude sont prévus sur les bras porteurs disposés (12, 16, 18, 21), des palpeurs liés aux dispositifs pivotants (38, 39) via un bloc de commande (41); en outre, la machine est caractérisée par le fait que des cordes (36, 37) sont tendues à partir des proximités libres des mâts (34, 35) jusqu'aux bras porteurs disposés (12, 16, 18, 21).

6. Machine d'arrosage mobile conforme à la spécification 4., caractérisée par le fait que les dispositifs pivotants (38, 39) sont formés par des cylindres hydrauliques.

7. Machine d'arrosage mobile conforme à la spécification 4., caractérisée par le fait que les palpeurs (43, 44) sont des bâtons oscillants.

8. Machine d'arrosage mobile conforme à la spécification 4., caractérisée par le fait que les cordes (36, 37) sont attachées aux bras porteurs (12, 16, 18, 21) à proximité des extrémités éloignées de l'appareil porteur (1).

9. Machine d'arrosage mobile conforme à la spécification 3., caractérisée par le fait que des palpeurs (43, 44) destinés à la mesure d'altitude sont prévus sur les bras porteurs disposés (12, 16, 18, 21), et que des cylindres hydrauliques (38, 39) sont prévus aux jonctions entre l'appareil porteur (1) et les bras porteurs (12, 16) ou bien entre bras porteur (12, 16) et bras porteur (18, 21); en outre, la machine est caractérisée par le fait qu'un bloc de commande (41) est placé entre le palpeur respectif (43, 44) et le cylindre hydraulique correspondant (38, 39).

10. Machine d'arrosage mobile conforme à au moins une seule des spécifications ci-dessus mentionnées, caractérisée par le fait que des tuyaux amovibles (33) sont prévus pour le dernier bras porteur (16, 21), éloigné de l'appareil porteur (1).

11. Machine d'arrosage mobile conforme à au moins une seule des spécifications ci-dessus mentionnées, caractérisée par le fait que l'appareil porteur (1) et les bras porteurs qui suivent des deux côtés (12, 16, 18, 21) présentent essentiellement la même longueur.
